# EUROPÄISCHE PATENTSCHRIFT

(11) **EP 1 315 647 B1**
(45) Veröffentlichungstag und Bekanntmachung des Hinweises auf die Patenterteilung: **15.06.2005**
(21) Anmeldenummer: 01969656.6
(22) Anmeldetag: 28.08.2001
(51) Int. Cl.: B61H 7/08

(54) **VORRICHTUNG ZUR MECHANISCHEN KOPPLUNG EINER SCHIENENBREMSE AN EINEM DREHGESTELL EINES SCHIENENFAHRZEUGES (BREMSKRAFTMITNEHMER)**
DEVICE FOR MECHANICALLY COUPLING A RAIL BRAKE ON A STEERING BOGIE OF A RAIL VEHICLE (BRAKE POWER DRIVER)
DISPOSITIF DE COUPLAGE MECANIQUE D'UN FREIN SUR RAIL A UN BOGGIE D'UN VEHICULE FERROVIAIRE (SYSTEME D'ENTRAINEMENT DE FORCE DE FREINAGE)

(30) Priorität: 28.08.2000 DE 10042213
(43) Veröffentlichungstag der Anmeldung: 04.06.2003
(73) Patentinhaber: KNORR-BREMSE Systeme für Schienenfahrzeuge GmbH, 80809 München (DE)
(72) Erfinder: SCHMIED, Lothar, A-2340 Mölding (AT); LEHMANN, Henry, A-2344 M. Enzersdorf (AT); FRIEDL, Andreas, A-1180 Wien (AT)
(74) Vertreter: Mattusch, Gundula
(86) Internationale Anmeldenummer: PCT/EP2001/009887
(87) Internationale Veröffentlichungsnummer: WO 2002/018190

(56) Entgegenhaltungen:
- EP-A- 0 894 690
- DE-A- 2 614 298
- DE-C- 883 293
- FR-A- 2 267 916
- US-A- 2 782 873

## Beschreibung

Die Erfindung betrifft eine Vorrichtung zur mechanischen Kopplung einer Schienenbremse an einem Drehgestell eines Schienenfahrzeuges, wie im Oberbegriff des Anspruchs 1 angegeben.

Das Drehgestell eines Schienenfahrzeuges trägt gewöhnlich als zwei- oder mehrachsiges Fahrgestell den Fahrzeugaufbau und ist um eine senkrechte Achse bezüglich des Fahrzeugaufbaus drehbar, so daß das Schienenfahrzeug hierdurch eine hohe Laufgüte insbesondere in Gleiskrümmungen erzielt. Als Betriebsbremse eines Schienenfahrzeuges der hier interessierenden Art ist eine am Drehgestell angeordnete Schienenbremse vorgesehen, die vorzugsweise als Magnetschienenbremse oder als Wirbelstrombremse ausgebildet ist. Eine Schienenbremse besteht gewöhnlich aus einer langgestreckten Anordnung von elektrischen Bremsmagneten, die bei Bestromung und Absenkung in Richtung der Schiene aufgrund der magnetischen Anziehungskräfte eine Bremsung des Schienenfahrzeuges einleiten.

Eine gattungsgemäße Vorrichtung ist aus der DE 26 14 298 A1 bekannt. Zur mechanischen Kopplung einer Schienenbremse am Drehgestell, d.h. zur Übertragung der Bremskraft zwischen den beiden Baueinheiten, ist an den zu beiden Seiten der Radsätze sich erstreckenden Drehgestellrahmen ein Magnetträger einer Wirbelstrombremse mit Hilfe von druckmittelbeaufschlagbaren Betätigungszylindern höhenverstellbar angeordnet. Die stirnseitigen Enden des Magnetträgers sind in Führungen gehaltert, welche sich von den Achslagern der Radsätze aus senkrecht nach unten gerichtet erstrecken. Auf diese Weise ist der Magnetträger zwischen der Bremsstellung und der Lösestellung absenkbar bzw. anhebbar geführt.

Bei Vorrichtungen der gattungsgemäßen Art sind im allgemeinen zwischen dem Magnetträger und dem Drehgestell wirkende starre Mitnehmeranschläge vorgesehen, welche in der Bremsstellung die auf die Bremsmagnete wirkende Bremskraft auf das Drehgestell übertragen. Eine derartige Kraftübertragung ist infolge des Anschlagprinzips mit einem recht rauhen Betrieb verbunden; auch ist es nicht möglich, eine ausreichende mechanische Entkopplung zwischen dem Magnetträger und dem Drehgestell horizontal in Querrichtung, also quer zur Ebene der Laufräder des Schienenfahrzeuges, vorzunehmen. Dies gilt um so mehr, als die stirnseitigen Enden des Magnetträgers in der Bremsstellung gewöhnlich in recht engen Führungen im Bereich der Achslager aufgenommen sind. Bei dem bekannten starren Anschlagprinzip können durch Bauteiltoleranzen und elastische Verformungen während des Bremsbetriebs unerwünschte Verschiebungen der Anlagepunkte am Mitnehmeranschlag auftreten, was zu nachteilig hohen zusätzlichen Belastungen des Bremsrahmens führt, der durch die Magnetträger und einer Spurhalteranordnung gebildet wird.

Davon ausgehend besteht die Aufgabe der vorliegenden Erfindung darin, eine gattungsgemäße Vorrichtung zur mechanischen Kopplung einer Schienenbremse an einem Drehgestell eines Schienenfahrzeuges dahingehend weiter zu verbessern, daß die Belastung des Bremsrahmens bei der Übertragung der Bremskräfte auf das Drehgestell minimiert wird.

Die Aufgabe wird ausgehend von einer Vorrichtung gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, daß eine aus einem harten Material bestehende Verschleißplatte über eine Federanordnung mit der Anschlagfläche des Mitnehmeranschlags verbunden ist, um in Ergebnis dessen eine in Längs- und Querrichtung wirkende elastische Kopplungsstelle zu bilden. Die Verschleißplatte mit der Federanordnung kann alternativ dazu ebenso gegenüberliegend, d.h. auf Seiten des Anschlagbereichs der Spurhalteranordnung, angebracht sein.

Der Vorteil der erfindungsgemäßen Lösung liegt insbesondere in einer Belastungsreduzierung des Bremsrahmens während des Bremsbetriebs, bei dem nunmehr eine elastische Verschiebbarkeit der zwischen dem Bremsrahmen und dem Drehgestell existierenden Anlagepunkte in Längs- und Querrichtung ermöglicht wird. Die elastische Verschiebbarkeit kann dabei aus der Steifigkeit der Federanordnung abgeleitet werden. Die Erfindung ist durch die belastungsoptimierenden Maßnahmen vergleichsweise leichter ausführbar und besitzt wegen der Elastizität der Kopplungsstelle eine höhere Sicherheit gegen eine mechanische Überlastung, so daß ein im Extremfall zu befürchtender Verzug des Bremsrahmens verhindert werden kann. Des weiteren wird zu Beginn jeder Bremsung der Stoß zwischen dem die Schienenbremse tragenden Bremsrahmen und dem Drehgestell reduziert.

Vorzugsweise besteht die Federanordnung aus einem plattenartig ausgebildeten elastomeren Material, wie beispielsweise einem herkömmlichen Gummielement. Besonders vorteilhaft kann die Federanordnung mit der Verschleißplatte als ein vorgefertigtes Gummi-Metallteil ausgeführt sein. Diese Gestaltung ermöglicht neben einer effektiven Herstellung auch eine einfache Montage am Drehgestell bzw. Bremsrahmen. Die Montage kann beispielsweise durch Schrauben erfolgen, so daß eine abgenutzte Verschleißplatte auch im Wartungsfall mitsamt der elastomeren Federanordnung in einfacher Weise austauschbar ist.

Alternativ zur Ausgestaltung der Federanordnung als plattenartiges Gummielement ist es auch denkbar, diese aus mindestens einer aus Federstahl bestehenden Druckfeder zu bilden. Mehrere solcher Druckfedern können beispielsweise nebeneinander und insoweit parallelgeschaltet zwischen der Verschleißplatte und dem Drehgestell bzw. dem Bremsrahmen vorgesehen werden, um während des Bremsbetriebes die insbesondere in Längsrichtung erforderliche hohe Federkraft aufzubringen. Die metallische Druckfeder kann je nach Belastung vorzugsweise nach Art einer Spiralfeder, einer Blattfeder, einer Tellerfeder oder dergleichen ausgebildet sein.

Vorzugsweise besteht die bei der erfindungsgemäßen Lösung verwendete Verschleißplatte aus einer harten Stahllegierung mit einem Mangananteil, um eine besonders hohe Verschleißfestigkeit zu erzielen. Daneben kann die Verschleißplatte auch aus einem anderen geeigneten harten Material - beispielsweise aus einer Messinglegierung - bestehen. Die Materialwahl ist auch hier von der mechanischen Belastung des Bauteils abhängig.

Weitere die Erfindung verbessernde Maßnahmen werden nachstehend gemeinsam mit der Beschreibung eines bevorzugten Ausführungsbeispiels anhand der Figuren näher dargestellt. Es zeigt:
- Figur 1: eine perspektivische Darstellung eines Bremsrahmens, der heb- und senkbar an einem Drehgestell eines Schienenfahrzeuges angeordnet ist,
- Figur 2: eine Draufsicht auf den Bremsrahmen nach Figur 1 mit Hervorhebung der Bereiche, die mit Mitnehmeranschlägen des Drehgestells zusammenwirken,
- Figur 3: eine Detaildarstellung aus Figur 2 im Bereich eines der am Drehgestell angeordneten Mitnehmeranschläge,
- Figur 4: eine separate Seitenansicht sowie ein Schnitt A - A eines Mitnehmeranschlags samt der erfindungsgemäßen Federanordnung.

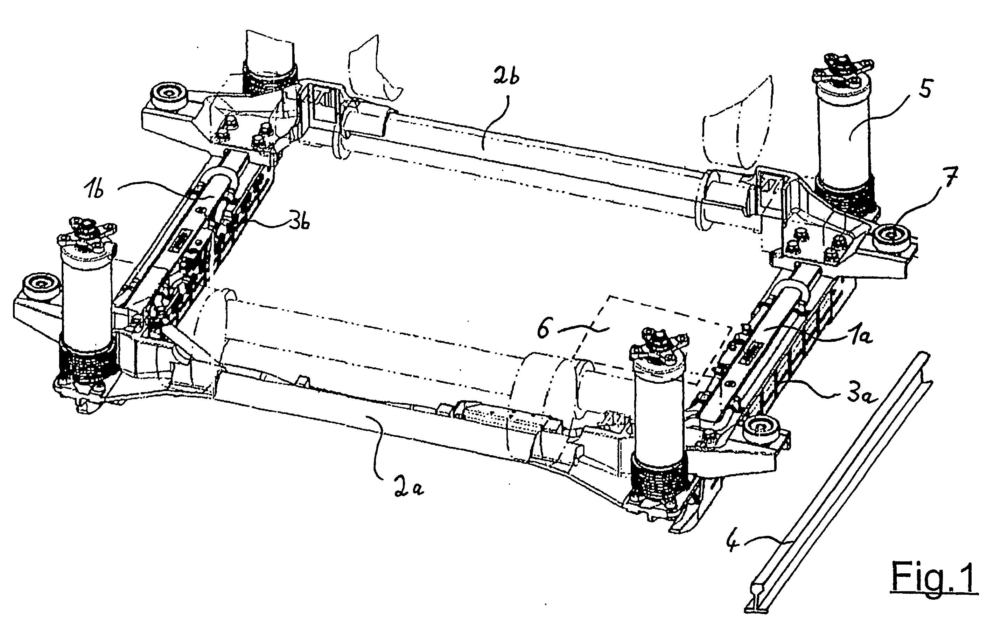

Ein Bremsrahmen besteht gemäß Figur 1 im wesentlichen aus zwei parallel in Spurbreite beabstandet angeordneten Magnetträgem 1a und 1b, die gemeinsam mit einer aus zwei Spurhaltern 2a und 2b bestehenden Spurhalteranordnung in Form eines Rechtecks zusammengesetzt sind. Der Spurhalter 2a und 2b und die Magnetträger 1a und 1b bestehen aus Stahlprofilen sind zur Bildung des Bremsrahmens miteinander verschraubt. An den beiden Magnetträgern 1a und 1b ist je ein elektrischer Bremsmagnet 3a und 3b befestigt. Zum Bremsen wirken die Bremsmagneten 3a und 3b mit je einer zugeordneten Schiene 4 des Gleises (hier symbolisch angedeutet) zusammen. Bei Absenken der bestromten Bremsmagnete 3a und 3b in Richtung der zugeordneten Schiene setzt aufgrund der hierbei entstehenden Magnetkraft die Bremswirkung für das sich relativ zum Gleis bewegende Schienenfahrzeug ein. Zum Absenken der Bremsmagnete 3a und 3b dienen in den Eckbereichen des Bremsrahmens angeordnete druckmittelbeaufschlagbare Betätigungszylinder 5, mit denen der gesamte Bremsrahmen samt Bremsmagnete 3a und 3b relativ zum Drehgestell 6 des hier nicht weiter dargestellten Schienenfahrzeuges vertikal bewegbar sind. Im angehobenen Zustand, d.h. in der Lösestellung der Magnetbremse, ist der Bremsrahmen über eine ebenfalls je in den Eckbereichen des Bremsrahmens angeordnete Zentriereinrichtung 7 am Drehgestell arretierbar. Die Arretierung erfolgt dabei durch ein formschlüssiges Zusammenwirken der Zentriereinrichtung 7 mit korrespondierend hierzu ausgebildeten konstruktiven Mitteln am Drehgestell 6.

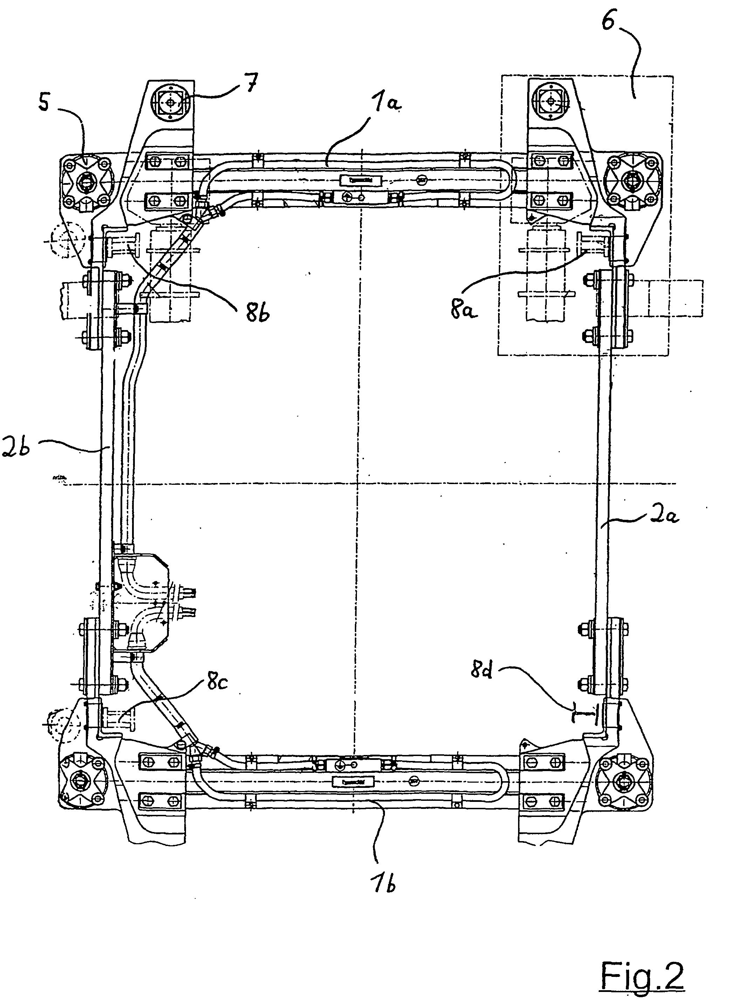

Wie gemäß Figur 2 in der Draufsicht auf den Bremsrahmen zu erkennen ist, sind seitens des Drehgestells 6 (Strichpunktlinie) insgesamt vier Mitnehmeranschläge 8a, 8b, 8c, 8d vorgesehen, die in den Eckbereichen des rechteckförmigen Bremsrahmens endseitig mit den Spurhaltern 2a und 2b korrespondieren. Dabei sind die Mitnehmeranschläge 8a bis 8d gegenüber dem Bremsrahmen unter Wahrung eines an späterer Stelle eingehender erläuterten Längs- und Querspiels angeordnet, um die vertikale Bewegbarkeit des Bremsrahmens sowie dessen Führung zu ermöglichen. Die Mitnehmeranschläge 8a, 8b, 8c, 8d sind rahmeninnenseitig derart plaziert, daß sie in beide Fahrtrichtungen wirken können. In der einen Fahrtrichtung kommen dabei die Mitnehmeranschläge 8a und 8b am Bremsrahmen zur Anlage; in der anderen Fahrtrichtung dagegen die Mitnehmeranschläge 8c und 8d.

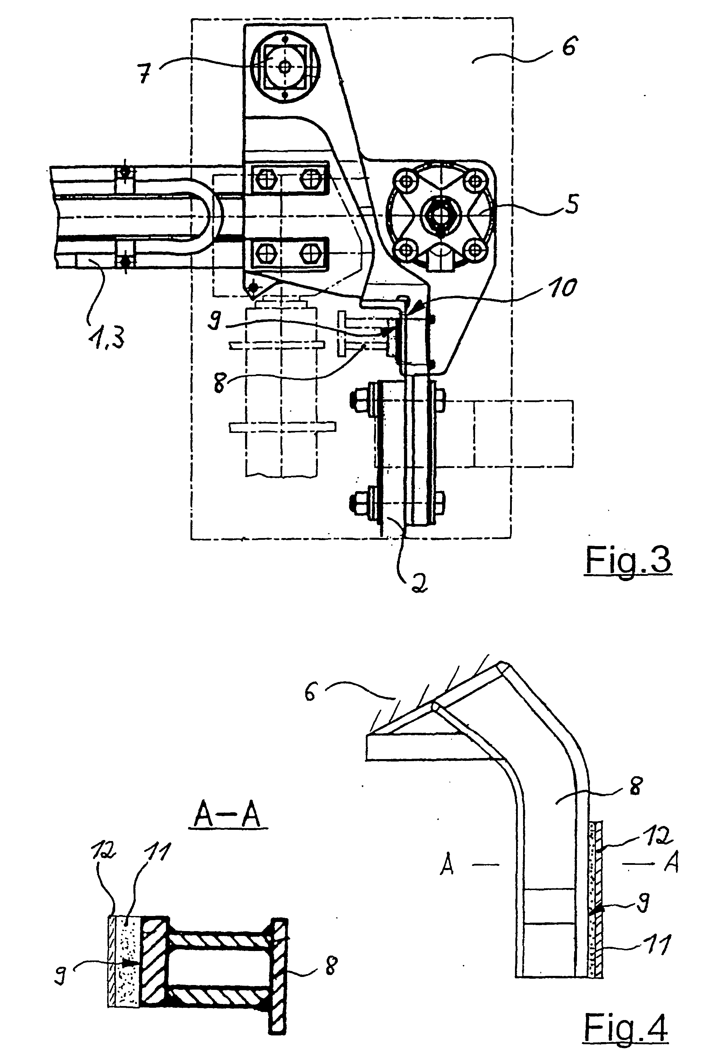

Gemäß Figur 3 weist der am Drehgestell 6 (Strichpunktlinie) angebrachte Mitnehmeranschlag 8 einen statisch stabilen kastenförmigen Querschnitt auf. Eine Anschlagfläche 9 des Mitnehmeranschlags 8 ist gegenüberliegend eines korrespondierenden Anschlagbereichs 10 endseitig des Spurhalters 2 angeordnet. Hierüber erfolgt die Bremskraftübertragung vom Bremsrahmen auf das Drehgestell 6. Im unbelasteten Zustand besteht ein Querspiel zwischen dem Mitnehmeranschlag 8 und derjenigen vertikal abgewinkelten Teilfläche des Anschlagbereichs 10, die parallel zur Bewegungsebene des Magnetträgers 1 verläuft. Ein Längsspiel besteht im unbelasteten Zustand zwischen der in der Bewegungsebene des Spurhalters 2 angeordneten Teilfläche des Anschlagbereichs 10 und der Anschlagfläche 9 des Mitnehmeranschlags 8. Das Längs- und Querspiel dient dem Ausgleich von geringen relativen Verschiebungen zwischen dem Bremsrahmen und dem Drehgestell 6, die aufgrund des Zusammenwirkens der Bremsmagnete 3 mit dem Gleis während der Bremsbetriebes auftreten und gewährleisten eine geführte vertikale Bewegbarkeit des Bremsrahmens.

In der Figur 4 ist der am Drehgestell 6 angebrachte Mitnehmeranschlag 8 einzeln dargestellt. Der sich vom Drehgestell 6 in vertikaler Richtung nach unten erstreckende Mitnehmeranschlag 8 besteht, wie der Schnitt A - A zeigt, aus vier Flachstahlprofilteilen die durch Schweißen zu der kastenförmigen Anordnung verbunden sind. Zur Minimierung der Belastung des hier nicht gezeigten Bremsrahmens während der Übertragung der Bremskräfte auf das Drehgestell 6 ist auf der endseitig am Mitnehmeranschlag 8 angeordneten Anschlagfläche 9 eine Federanordnung 11 befestigt. Die Federanordnung 11 ist hier in Form eines plattenartig ausgebildeten Gummielements ausgeführt. Hierauf ist wiederum eine Verschleißplatte 12 aus einer verschleißfesten Mn-Stahllegierung befestigt. Während der im Bremsbetrieb festen Anlage der Verschleißplatte 12 an dem hier nicht gezeigten korrespondierenden Anschlagbereich des Bremsrahmens bildet sich durch die Federwirkung der Federanordnung 11 eine in Längs- und Querrichtung elastische Kopplungsstelle, so daß der Bremsrahmen während des Bremsbetriebes eine stets belastungsoptimale Position einnehmen kann.

Die Erfindung ist nicht beschränkt auf das vorstehend beschriebene bevorzugte Ausführungsbeispiel. Es sind vielmehr auch konstruktive Abwandlungen hiervon denkbar, die selbst bei anders gearteter Ausgestaltung in den von der Erfindung beanspruchten Schutzbereich eingreifen. So ist die Erfindung insbesondere nicht auf die Verwendung eines Elastomerkörpers als Federanordnung beschränkt. Diese kann ebenso beispielsweise aus einer aus Federstahl hergestellten Federanordnung bestehen, wobei über die Formgebung des Federstahls die erforderliche Feaersteifigkeit je nach Einsatzfall anpaßbar ist. Weiterhin ist die Gestalt des Bremsrahmens nicht auf eine rechteckförmige Anordnung beschränkt. Eine andere Anordnung ist ebenso denkbar, die unter Wahrung des Spurbreitenabstandes eine synchrone vertikale Bewegbarkeit der Bremsmagnete sicherstellt.

### Bezugszeichenliste

- **1**: Magnetträger
- **2**: Spurhalter
- **3**: Bremsmagnet
- **4**: Schiene
- **5**: Betätigungszylinder
- **6**: Drehgestell
- **7**: Zentriereinrichtung
- **8**: Mitnehmeranschlag
- **9**: Anschlagfläche
- **10**: Anschlagbereich
- **11**: Federanordnung
- **12**: Verschleißplatte

## Patentansprüche

1. Vorrichtung zur mechanischen Kopplung einer Schienenbremse an einem Drehgestell (6) eines Schienenfahrzeuges, welche Schienenbremse je einer Schiene (4) des Gleises zugeordnete elektrische Bremsmagnete (3a, 3b) aufweist, die an je einem Magnetträger (1a, 1b) relativ zur zugeordneten Schiene (4) heb- und senkbar angeordnet sind, wobei bei dieser Vorrichtung eine Spurhalteranordnung vorgesehen wird, die einer aus den Magnetträgern (1a, 1b) und Spurhaltern (2a, 2b) gebildeten. Bremsrahmen aufweist, durch welchen die Bremsmagnete in Spurbreite gehalten werden, wobei weiterhin mehrere längs und quer zur Fahrtrichtung wirkende Mitnehmeranschläge (8a bis 8d) am Drehgestell (6) vorgesehen sind, die zur Bremskraftübertragung mit an dem Bremsrahmen vorgesehenen korrespondierenden Anschlagbereichen (10) zusammenwirken,
**dadurch gekennzeichnet, daß** eine aus einem harten Material bestehende Verschleißplatte (12) über eine Federanordnung (11) mit einer Anschlagfläche (9) des Mitnehmeranschlags (8) oder mit dem bremsrahmenseitigen Anschlagbereich (10) verbunden ist, um eine in Längs- und Querrichtung wirkende elastische Kopplungsstelle zu bilden.

2. Vorrichtung nach Anspruch 1,
**dadurch gekennzeichnet, daß** die Federanordnung (11) aus einem plattenartig ausgebildeten elastomeren Material besteht.

3. Vorrichtung nach Anspruch 2,
**dadurch gekennzeichnet, daß** die Federanordnung (11) mit der Verschleißplatte (12) als Gummi-Metallteil ausgebildet ist.

4. Vorrichtung nach Anspruch 1,
**dadurch gekennzeichnet, daß** das Federanordnung (11) aus mindestens einer aus Federstahl bestehenden Druckfeder gebildet ist.

5. Vorrichtung nach Anspruch 4,
**dadurch gekennzeichnet, daß** die metallische Druckfeder nach Art einer Spiralfeder, einer Blattfeder oder einer Tellerfeder ausgebildet ist.

6. Vorrichtung nach Anspruch 1,
**dadurch gekennzeichnet, daß** die Verschleißplatte (12) aus einer harten Stahllegierung mit einem Mangananteil besteht.

7. Vorrichtung nach Anspruch 1,
**dadurch gekennzeichnet, daß** die Verschleißplatte (12) aus einer Messinglegierung besteht.

8. Vorrichtung nach Anspruch 1,
**dadurch gekennzeichnet, daß** die Spurhalteranordnung zwei parallele und beabstandet zueinander angeordnete Spurhalter (2a, 2b) umfaßt, die gemeinsam mit den Magnetträgem (1a, 1b) einen rechteckförmigen Bremsrahmen bilden.

9. Vorrichtung nach Anspruch 7,
**dadurch gekennzeichnet, daß** insgesamt vier Mitnehmeranschläge (8a, 8b, 8c, 8d) vorgesehen sind, die mit den Eckbereichen des rechteckförmigen Bremsrahmens endseitig an der Spurhalteranordnung zur Anlage kommen, wobei die Mitnehmeranschläge (8a bis 8d) gegenüber dem Bremsrahmen unter Wahrung eines Längs- und Querspiels angeordnet sind.

10. Vorrichtung nach Anspruch 1,
**dadurch gekennzeichnet, daß** das Heben und Senken der elektrischen Bremsmagneten (3a, 3b) über endseitig am Magnetträger (1a, 1b) angeordnete druckmittelbeaufschlagbare Betätigungszylinder (5) erfolgt, wobei die Bremsstellung durch Senken der Bremsmagnete (3a, 3b) eingenommen wird und die Bremsmagnete (3a, 3b) in der Lösestellung mit einer Zentriereinrichtung (7) zur Arretierung formschlüssig zusammenwirken.

## Claims

1. Device for mechanically coupling a track brake to a bogie (6) of a rail vehicle, which track brake includes electrical braking solenoids (3a, 3b) associated with a respective rail (4) of the track, which are each so disposed on a respective solenoid support (1a, 1b) that they can be raised and lowered relative to the associated rail (4), with a rail brace system being provided in this device, which indudes a brake frame constituted by said solenoid supports (1a, 1b) and rail braces (2a, 2b), which brake frame serves to hold said braking solenoids within the track width, wherein moreover several driving dogs (8a à 8d) are provided on said bogie (6), which are operative along and across the direction of travel, which driving dogs cooperate to transmit the braking force by means of corresponding bearing zones (10) that are provided on said brake frame,
**characterised in that** a wearing plate (12) made of a hard material is connected via a spring system (11) to a bearing surface (9) of said driving dog (8) or to the bearing zone (10) on the side of said brake frame so as to form a resilient coupling site operative along the longitudinal and the transverse directions.

2. Device according to Claim 1, **characterised in that** said spring system (11) is made of an elastomer material configured in the form of a plate.

3. Device according to Claim 2, **characterised in that** said spring system (11) with said wearing plate (12) is designed in the form of a rubber/metal part.

4. Device according to Claim 1, **characterised in that** said spring system (11) is constituted by at least one compression spring made of spring steel.

5. Device according to Claim 5, **characterised in that** said metal compression spring is designed in the manner of a spiral spring, a leaf spring or a disk spring.

6. Device according to Claim 1, **characterised in that** said wearing plate (12) is made of a hard steel alloy containing a manganese fraction.

7. Device according to Claim 1, **characterised in that** said wearing plate (12) is made of a brass alloy.

8. Device according to Claim 1, **characterised in that** said rail brace system comprises two parallel rail braces (2a, 2b) arranged at a mutual spacing, which, jointly with said solenoid supports (1a, 1 b), constitute a rectangular brake frame.

9. Device according to Claim 7, **characterised in that** four driving dogs (8a, 8b, 8c, 8d) are provided altogether, which bear against said rail brace system by the corner areas of said rectangular brake frame on the terminal side, with said driving dogs (8a to 8d) being arranged in opposition to said brake frame so as to maintain a longitudinal and lateral traverse.

10. Device according to Claim 1, **characterised in that** said electrical braking solenoids (3a, 3b) are raised and lowered via actuating cylinders (5) disposed on the terminal side on said solenoid support (1a, 1 b) and adapted to be acted upon by a compressed medium, wherein the braking position is assumed by lowering said braking solenoids (3a, 3b) and wherein, in the brake release position, said braking solenoids (3a, 3b) cooperate positively with a centring means (7) for locking.

## Revendications

1. Dispositif de couplage mécanique d'un frein sur rail à un bogie (6) d'un véhicule ferroviaire, ce frein sur rail comprenant des électroaimants de freinage (3a, 3b) affectés à un rail (4) respectif de la voie, dont chacun est disposé à une bride respective de support d'aimant (1a, 1b) pour être levé ou abaissé relativement au rail affecté (4), à un système à entretoises de contrerail étant disposé dans ce dispositif, qui comprend un cadre de frein constitué par lesdites brides de support d'aimants (1a, 1b) et des entretoises de contrerail (2a, 2b), audit cadre de frein retenant lesdits aimants de freinage au-dedans l'écartement de la voie, dans lequel, au plus, plusieurs butées d'entraînement (8a à 8d) sont formés audit bogie (6), qui sont actives le long et à travers du sens de la marche, ces butées d'entraînement coopérant a fin de transmettre l'effort de freinage moyennant des zones de butée correspondantes (10), qui sont formées audit cadre de frein,
**caractérisé en ce qu'**une plaque d'usure (12), composée d'un matériau dur, est raccordée, via un groupe à ressort (11), à une surface d'arrêt (9) de ladite butée d'entraînement (8) ou à la zone d'arrêt (10) du côté dudit cadre de frein afin de former un endroit de couplage élastique, qui est opératif le long les directions longitudinales et transversales.

2. Dispositif selon la revendication 1, **caractérisé en ce que** ledit groupe à ressort (11) est composé d'un matériau élastomère conçu sous forme du type plaque.

3. Dispositif selon la revendication 2, **caractérisé en ce que** ledit groupe à ressort (11) avec ladite plaque d'usure (12) est conçu sous forme d'un élément en caoutchouc/métal.

4. Dispositif selon la revendication 1, **caractérisé en ce que** ledit groupe à ressort (11) est constitué par au moins un ressort de pression composé d'acier à ressorts.

5. Dispositif selon la revendication 5, **caractérisé en ce que** ledit ressort métallique de pression est conçu à la façon d'un ressort à boudin, d'un ressort à lames ou un ressort à disques.

6. Dispositif selon la revendication 1, **caractérisé en ce que** ladite plaque d'usure (12) est faite en un alliage d'acier dur, qui contient une fraction en manganèse.

7. Dispositif selon la revendication 1, **caractérisé en ce que** ladite plaque d'usure (12) est faite en un alliage de laiton.

8. Dispositif selon la revendication 1, **caractérisé en ce que** ledit groupe d'entretoises de contrerail comprend deux entretoises de contrerail (2a, 2b) parallèles, disposées en parallèle l'une à l'autre et espacées l'une de l'autre, qui coopèrent avec lesdites brides de support d'aimants (1a, 1b) afin de former ensemble un cadre de frein rectangulaire.

9. Dispositif selon la revendication 7, **caractérisé en ce que** quatre butées d'entraînement (8a, 8b, 8c, 8d) sont disposées au total, qui portent contre les zones de coin dudit cadre de frein rectangulaire, du côté terminal, audit groupe d'entretoises de contrerail, auxdites butées d'entraînement (8a à 8d) étant disposées en face dudit cadre de frein, en maintenant un jeu longitudinal et transversal.

10. Dispositif selon la revendication 1, **caractérisé en ce que** lesdits électroaimants de freinage (3a, 3b) s'élèvent et s'abaissent via des cylindres acteurs (5) disposés du côté terminal à ladite bride de support d'aimant (1a, 1b) et sont aptes à être exposés aux effets d'un milieu comprimé, dans lequel la position de freinage est achevés par l'abaissement desdits aimants de freinage (3a, 3b) et, en position de desserrage de frein, lesdits aimants de freinage (3a, 3b) coopèrent, de manière positive, avec un moyen de centrage (7) pour l'arrêt.
